# EUROPEAN PATENT APPLICATION

(11) **EP 2 621 221 A1**
(43) Date of publication of application: **31.07.2013**
(21) Application number: 11835647.6
(22) Date of filing: 29.10.2011
(51) Int. Cl.: H04W 48/20

(54) **COMMUNICATION METHOD, DEVICE, AND SYSTEM**

(30) Priority: 29.10.2010 CN 201010529000
(71) Applicant: Huawei Technologies Co., Ltd., Shenzhen, Guangdong 518129 (CN)
(72) Inventor: YANG, Nan, Shenzhen Guangdong 518129 (CN); WANG, Yuanyao, Shenzhen Guangdong 518129 (CN); YAN, Xiaolong, Shenzhen Guangdong 518129 (CN); LI, Mianwei, Shenzhen Guangdong 518129 (CN)
(74) Representative: Goddar, Heinz J.
(86) International application number: PCT/CN2011/081534
(87) International publication number: WO 2012/055374

(57) **Abstract**

The present invention discloses a communication method, apparatus, and system, and relates to the field of communication technologies. The method includes: obtaining uplink data and signal quality of an uplink signal corresponding to the uplink data, where the uplink data and the signal quality are sent by each RRU in a remote radio unit RRU cell; selecting uplink data sent by an RRU with best signal quality; and processing the uplink data sent by the RRU with the best signal quality, and then sending the processed uplink data to a base station controller BSC. The apparatus includes: a first obtaining module, a first selecting module, and a first processing module. The system includes: a master remote radio unit RRU and at least one slave RRU. The present invention may ensure communication quality of a mobile station during communication in scenarios such as a packet switched domain in a high-speed movement process.

## Description

### FIELD OF THE INVENTION

The present invention relates to the field of communication technologies, and particularly, to a communication method, apparatus, and system.

### BACKGROUND OF THE INVENTION

With the development of science and technology, in order to meet people's requirements on a vehicle speed, a high speed railway emerges. The high speed railway poses a challenge to mobile communication while bringing high-efficient work and life to people. Under the impact of factors, such as frequent handover, fast/slow fading, and the Doppler effect that are in a high-speed movement process, and radio signal attenuation caused by vehicle body material, communication quality of a mobile station deteriorates obviously.

To ensure the communication quality of the mobile station in the high-speed movement process, currently, the prior art provides a method for selecting a serving station address in a GSM (Global System for Mobile Communications, global system for mobile communications) circuit switched domain, which is specifically as follows: RRUs (Remote Radio Unit, remote radio unit) are deployed remotely, to make multiple RRUs supported by one BBU (Baseband Control Unit, baseband control unit) physically belong to different station addresses, and logically belong to a same cell; when the mobile station enters the logical cell to communicate, all RRUs in the same cell simultaneously receives uplink signals sent by the mobile station, and an RRU with the best signal quality is selected, from all the RRUs in the same cell, as a serving station address of the mobile station; an uplink signal received by the serving station address is transmitted to a BSC (Base Station Controller, base station controller) through the BBU; and the serving station address of the mobile station is periodically updated, to ensure the communication quality during communication in the circuit switched domain.

The prior art has at least the following disadvantages:
In some cases, when multiple mobile stations served by different RRUs perform packet service, because of particularity of channel time division multiplexing, same channel of the RRUs need to be used in a time division manner. If the method for selecting a serving station address is also used for the packet services, the selected serving station address cannot be the best one for every mobile station, which results in a low rate at which some mobile stations are when carrying out packet services, and cannot ensure the communication quality during communication in a packet switched domain.

### SUMMARY OF THE INVENTION

To ensure communication quality of a mobile station during communication in a packet switched domain in a high-speed movement process, embodiments of the present invention provide a communication method, apparatus, and system. The technical solutions are as follows:
A communication method includes:
   obtaining uplink data and signal quality of an uplink signal corresponding to the uplink data, where the uplink data and the signal quality are sent by each RRU in a remote radio unit RRU cell;
   selecting uplink data sent by an RRU with best signal quality; and
   processing the uplink data sent by the RRU with the best signal quality; and sending the processed uplink data to a base station controller BSC.

A communication apparatus includes:
a first obtaining module, configured to obtain uplink data and signal quality of an uplink signal corresponding to the uplink data, where the uplink data and the signal quality are sent by each RRU in a remote radio unit RRU cell;
a first selecting module, configured to select uplink data that is sent by an RRU with best signal quality and obtained by the first obtaining module; and
a first processing module, configured to process the uplink data that is sent by the RRU with the best signal quality and selected by the first selecting module, and then send the processed uplink data to a base station controller BSC.

A communication system includes: one master remote radio unit RRU and at least one slave RRU, where the master RRU and the slave RRU physically belong to different station addresses and logically belong to a same cell, the slave RRU is configured to receive an uplink signal sent by a mobile station, decode the uplink signal to obtain uplink data, and send the uplink data and signal quality of the received uplink signal to the master RRU; and
the master RRU includes: a third processing module and a fourth processing module; where
the third processing module is configured to receive the uplink signal sent by the mobile station, decode the uplink signal to obtain the uplink data, and send the uplink data and signal quality of the received uplink signal to the fourth processing module; and
the fourth processing module is configured to receive the uplink data and the signal quality of the uplink signal which are sent by the slave RRU and the third processing module; select uplink data sent by an RRU with best signal quality; and process the uplink data sent by the RRU with the best signal quality, and then send the processed uplink data to a BSC.

The technical solutions provided in the embodiments of the present invention have the following beneficial effects:
By selecting a signal with best signal quality to perform uplink communication, mobile stations served by different RRUs are enabled to use a superior uplink signal, and communication quality of the mobile stations during communication in scenarios such as the packet switched domain may be ensured in the high-speed movement process; moreover, by selecting the signal with the best signal quality to perform the uplink communication, in a case of air interface interference in part of RRUs, service performance is not affected, and better service experience may be brought to a user.

### BRIEF DESCRIPTION OF THE DRAWINGS

FIG. 1 is a flowchart of a communication method according to a first embodiment of the present invention;
FIG. 2A and FIG. 2B are a flowchart of a communication method according to a second embodiment of the present invention;
FIG. 3 is a schematic structural diagram of a first communication apparatus according to a third embodiment of the present invention;
FIG. 4 is a schematic structural diagram of a second communication apparatus according to the third embodiment of the present invention;
FIG. 5 is a schematic structural diagram of a third communication apparatus according to the third embodiment of the present invention;
FIG. 6 is a schematic structural diagram of a fourth communication apparatus according to the third embodiment of the present invention; and
FIG. 7 is a schematic structural diagram of a communication system according to a fourth embodiment of the present invention.

### DETAILED DESCRIPTION OF THE EMBODIMENTS

To make objectives, technical solutions, and advantages of the present invention clearer, implementation manners of the present invention are further described in detail in conjunction with the accompanying drawings.

It should be noted that, to facilitate the illustration, a cell formed by multiple RRUs that physically belong to different station addresses and logically belong to a same cell is referred to as an RRU cell.

### Embodiment 1

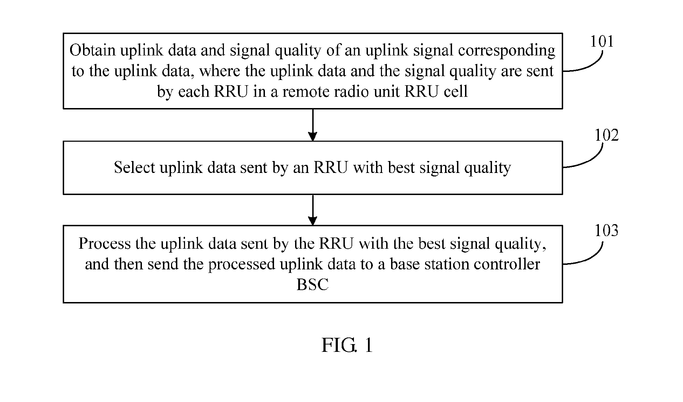

Referring to FIG. 1, an embodiment of the present invention provides a communication method, including:
101: A master remote radio unit RRU obtains uplink data and signal quality of an uplink signal corresponding to the uplink data, where the uplink data and the signal quality are sent by each RRU in a remote radio unit RRU cell.

The signal quality of the uplink signal may specifically be a parameter, such as an SNR (Signal To Noise Ratio, signal to noise ratio) of the uplink signal, which can embody quality of the signal. Moreover, generally, the nearer an RRU is to a mobile station, the better signal quality of a received uplink signal is.

An RRU may be randomly selected as a master RRU from all RRUs that belong to a same RRU cell; or an RRU may be selected, according to a certain selection rule, as a master RRU from all RRUs that belong to a same RRU cell. A method for selecting the master RRU is not limited here.
102: The master RRU selects uplink data sent by an RRU with best signal quality.
103: The master RRU processes the uplink data sent by the RRU with the best signal quality, and then sends the processed uplink data to a base station controller BSC.

That the master RRU processes the uplink data sent by the RRU with the best signal quality, and then sends the processed uplink data to the base station controller BSC may specifically be that the master RRU performs uplink in-band processing on the uplink data sent by the RRU with the best signal quality, and sends processed uplink data to the base station controller BSC through a baseband control unit BBU.

Further, that the master RRU selects the uplink data sent by the RRU with the best signal quality specifically includes that:
the master RRU compares a signal to noise ratio of the uplink signal, where the signal to noise ratio of the uplink signal is sent by each RRU, and selects uplink data sent by an RRU with a highest signal to noise ratio.

Further, the foregoing uplink data is uplink service access request data or uplink service data.

Further, when the foregoing uplink data is the uplink service access request data, after processing the uplink data sent by the RRU with the best signal quality, and then sending the processed uplink data to the base station controller BSC, the method further includes that: the master RRU obtains information of a channel allocated by the BSC for an uplink service corresponding to the uplink service access request data, and informs each RRU about the information of the channel.

Further, the method includes that:
the master RRU obtains downlink service data, and processes the downlink service data; and
the master RRU synchronously sends processed downlink service data to each RRU, so that after receiving the processed downlink service data, each RRU synchronously sends the processed downlink service data.

That the master RRU obtains the downlink service data and processes the downlink service data may specifically be that: the master RRU obtains the downlink service data, and performs downlink in-band signaling processing and encoding on the downlink service data to obtain encoded downlink service data. Accordingly, the foregoing processed downlink service data is specifically the encoded downlink service data.

With the communication method described in the embodiment of the present invention, by selecting a signal with best signal quality to perform uplink communication, mobile stations served by different RRUs are enabled to use a superior uplink signal, and communication quality of the mobile stations during communication in scenarios such as a packet switched domain may be ensured in a high-speed movement process; moreover, by selecting the signal with best signal the quality to perform the uplink communication, in a case of air interface interference in part of RRUs, service performance is not affected, and better service experience may be brought to a customer. Besides, by selecting an access request signal with best signal quality to get access, it may be ensured that the mobile stations can get access in the high-speed movement process. In addition, by synchronously sending the encoded downlink service data to each RRU, each RRU is enabled to synchronously send the encoded downlink service data after receiving the encoded downlink service data, and a mobile station served by any RRU is enabled to receive the downlink service data.

It should be noted that, the communication method provided in the embodiment of the present invention may be applied to various application scenarios such as a GSM circuit switched domain and a GSM packet switched domain. Application in the GSM packet switched domain is taken as an example in the following for further illustration. The uplink service data in the GSM packet switched domain is specifically packet service data, the uplink service signal is specifically a packet service signal, the uplink service access request data is specifically packet service access request data, an uplink service access request signal is specifically a packet service access request signal, the downlink service data is specifically downlink packet service data, and the encoded downlink service data is specifically encoded downlink packet service data.

### Embodiment 2

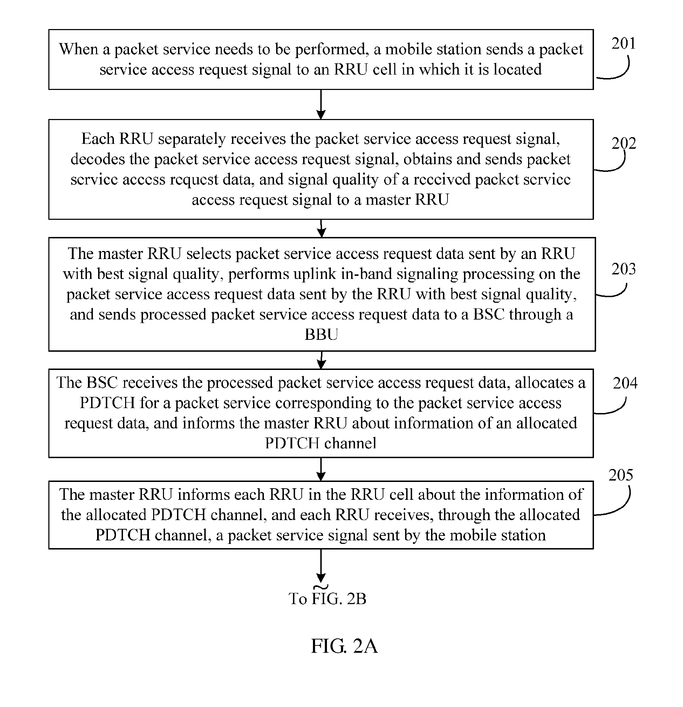

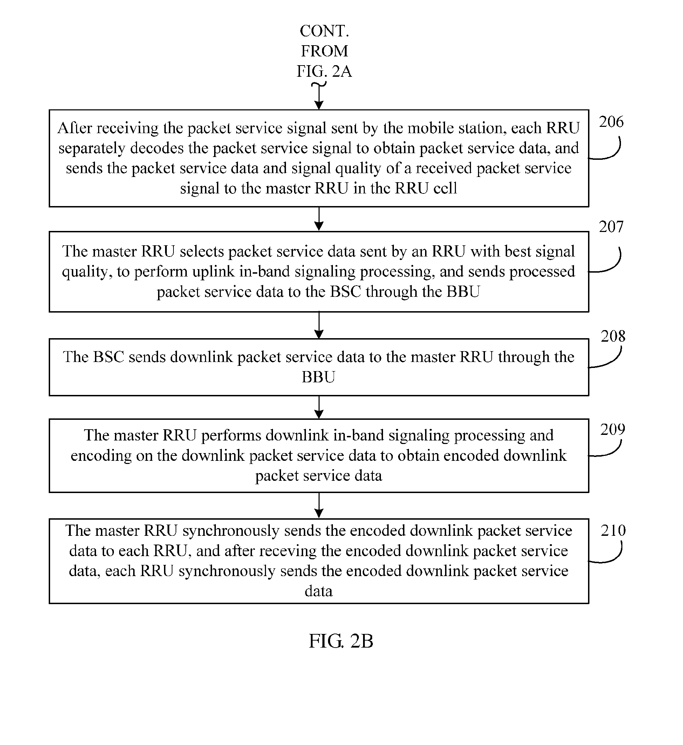

Referring to FIG. 2A and FIG. 2B, an embodiment of the present invention provides a communication method, including:
201: When a packet service needs to be performed, a mobile station sends a packet service access request signal to an RRU cell in which it is located.
202: Each RRU in the RRU cell separately receives the packet service access request signal, separately decodes the packet service access request signal to obtain packet service access request data, and sends the packet service access request data and signal quality of a received packet service access request signal to a master RRU in the RRU cell.

The signal quality of the received packet service access request signal may specifically be a parameter, such as an SNR of the received packet service access request signal, which can embody quality of the signal. Moreover, generally, the nearer an RRU is to the mobile station, the better signal quality of a received packet service access request signal is.

An RRU may be randomly selected as the master RRU from all RRUs that belong to a same RRU cell; or an RRU may be selected, according to a certain selection rule, as the master RRU from all RRUs that belong to a same RRU cell. A method for selecting the master RRU is not limited here.
203: After the master RRU receives the packet service access request data and the signal quality of the packet service access request signal that are sent by each RRU, the master RRU selects packet service access request data sent by an RRU with best signal quality, performs uplink in-band signaling processing on the packet service access request data sent by the RRU with the best signal quality, and sends processed packet service access request data to a BSC through a BBU.

Specifically, the master RRU receives the signal quality (for example, a signal to noise ratio) sent by each RRU (including the master RRU itself) in the RRU cell, compares the signal quality sent by each RRU, judges an RRU with best signal quality (for example, with a highest signal to noise ratio), and selects the packet service access request data sent by the RRU with the best signal quality.
204: The BSC receives the processed packet service access request data, allocates a PDTCH (Packet Data Traffic Channel, packet data traffic channel) for a packet service corresponding to the packet service access request data, and informs the master RRU about information of an allocated PDTCH channel.

Specifically, each RRU has multiple carriers, and each carrier has multiple logical channels. According to specific application situations, the logical channels corresponding to each carrier of each RRU may be separately configured as traffic channels for performing different services. It should be noted that, to facilitate application and management, each RRU in the RRU cell in this embodiment has the same number of carriers, each carrier has the same number of logical channels, and when the logical channels corresponding to each carrier of each RRU are configured, a same logical channel corresponding to a same carrier of each RRU needs to be configured for performing a same service.

For example, three RRUs included in the RRU cell in this embodiment are RRU1, RRU2, and RRU3, and each RRU has two carriers labeled as carrier A and carrier B. Each carrier includes eight logical channels, the eight logical channels of carrier A are labeled as A0, A1, A2, ..., A7, and logical channels A4, A5, A6, and A7 of carrier A of each RRU are configured for performing the packet service, that is, the logical channels A4, A5, A6, and A7 are PDTCH channels.

Specifically, after the BSC receives the processed packet service access request data, according to a situation of PDTCH channels that the master RRU has, a corresponding PDTCH channel of each RRU is allocated for a packet service corresponding to current packet service access request data. It should be noted that, because the PDTCH channels of each RRU in the RRU cell have consistency, only according to the situation of the PDTCH channels that the master RRU has, the corresponding PDTCH channel of each RRU may be allocated for the packet service corresponding to the current packet service access request data.

For example, according to the situation of the PDTCH channels that the master RRU has, it is known that logical channels A4, A5, A6, and A7 of the master RRU are PDTCH channels, and in this case, the logical channels A4, A5, A6, and A7 of each RRU may be allocated to a current mobile station for performing the packet service.

It should be noted that, after the PDTCH channels are configured for the master RRU, the master RRU needs to perform PDTCH channel synchronization. A specific synchronization method is the same as that in the prior art, and is not repeatedly described here.
205: The master RRU informs each RRU in the RRU cell about the information of the allocated PDTCH channel, and each RRU receives, through the allocated PDTCH channel, a packet service signal sent by the mobile station.
206: After receiving the packet service signal sent by the mobile station, each RRU separately decodes the packet service signal to obtain packet service data, and sends the packet service data and signal quality of a received packet service signal to the master RRU in the RRU cell.

Meaning of the signal quality of the received packet service signal is similar to that of the signal quality of the received packet service access request signal in step 202, and is not repeatedly described here.
207: After the master RRU receives the packet service data and the signal quality of the packet service signal that are sent by each RRU, the master RRU selects packet service data sent by an RRU with best signal quality, to perform uplink in-band signaling processing, and sends processed packet service data to the BSC through the BBU.

The step is specifically similar to step 203, and is not repeatedly described here.
208: The BSC sends downlink packet service data to the master RRU through the BBU.
209: The master RRU performs downlink in-band signaling processing and encoding on the downlink packet service data to obtain encoded downlink packet service data.
210: The master RRU synchronously sends the encoded downlink packet service data to each RRU, and after receiving the encoded downlink packet service data, each RRU synchronously sends the encoded downlink packet service data.

After receiving the encoded downlink packet service data, each RRU synchronously sends the encoded downlink packet service data (that is, synchronously sends the encoded downlink packet service data), so that mobile stations served by different RRUs may receive the encoded downlink packet service data sent by the RRUs by which the mobile stations are served, which ensures quality of the encoded downlink packet service data received by the mobile stations.

It should be noted that, because the packet service access request data is mainly used for access of the mobile station, the quality of the packet service access request data does not greatly affect communication quality of the mobile station. Therefore, step 203 may also be that the master RRU selects to perform uplink in-band signaling processing on packet service access request data sent by any RRU, and sends processed packet service access request data to the BSC through the BBU, so that in step 202, each RRU does not need to send the signal quality of the received packet service access request signal to the master RRU in the RRU cell. Moreover, steps 201 to 203 may also be implemented in any other feasible manner in the prior art, which is not specifically limited.

With the communication method described in the embodiment of the present invention, by selecting a signal with best signal quality to perform uplink communication, the mobile stations served by different RRUs are enabled to use a superior uplink signal, and communication quality of the mobile stations during communication in scenarios such as a packet switched domain may be ensured in a high-speed movement process; moreover, by selecting the signal with the best signal quality to perform the uplink communication, in a case of air interface interference in part of RRUs, service performance is not affected, and better service experience may be brought to a customer. Besides, by selecting an access request signal with best signal quality to get access, it may be ensured that the mobile stations can get access in the high-speed movement process. In addition, by synchronously sending the encoded downlink service data to each RRU, each RRU is enabled to synchronously send the encoded downlink service data after receiving the encoded downlink service data, and a mobile station served by any RRU is enabled to receive the downlink service data.

### Embodiment 3

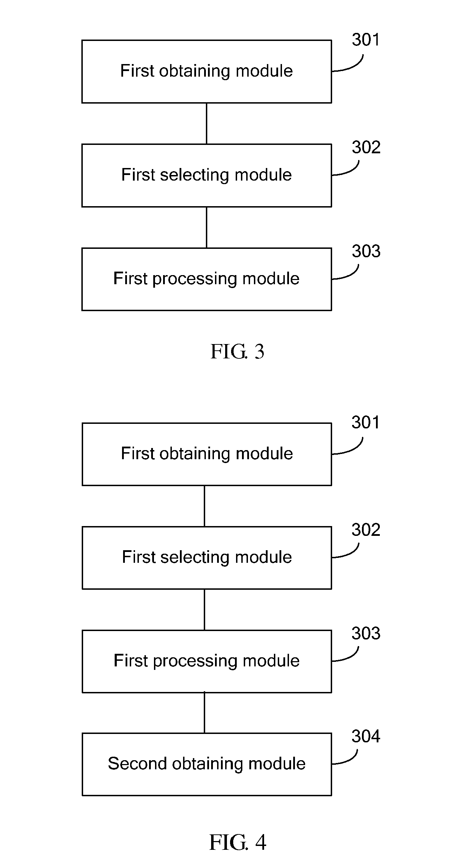

Referring to FIG. 3, an embodiment of the present invention provides a communication apparatus. The apparatus includes:
a first obtaining module 301, configured to obtain uplink data and signal quality of an uplink signal corresponding to the uplink data, where the uplink data and the signal quality are sent by each RRU in a remote radio unit RRU cell; where
the signal quality of the uplink signal may specifically be a parameter, such as an SNR of the uplink signal, which can embody quality of the signal. Moreover, generally, the nearer an RRU is to a mobile station, the better signal quality of a received uplink signal is;
a first selecting module 302, configured to select uplink data that is sent by an RRU with best signal quality and obtained by the first obtaining module 301; and
a first processing module 303, configured to process the uplink data that is sent by the RRU with the best signal quality and selected by the first selecting module 302, and then send the processed uplink data to a base station controller BSC.

Further, the first selecting module 302 includes:
a selecting unit, configured to compare a signal to noise ratio of the uplink signal and select uplink data sent by an RRU with a highest signal to noise ratio, where the signal to noise ratio of the uplink signal is sent by each RRU and obtained by the first obtaining module 301.

Further, the uplink data is uplink service access request data or uplink service data.

Further, referring to FIG. 4, when the uplink data is the uplink service access request data, the apparatus also includes:
a second obtaining module 304, configured to obtain information of a channel allocated by the BSC for an uplink service corresponding to the uplink service access request data, and inform each RRU about the information of the channel.

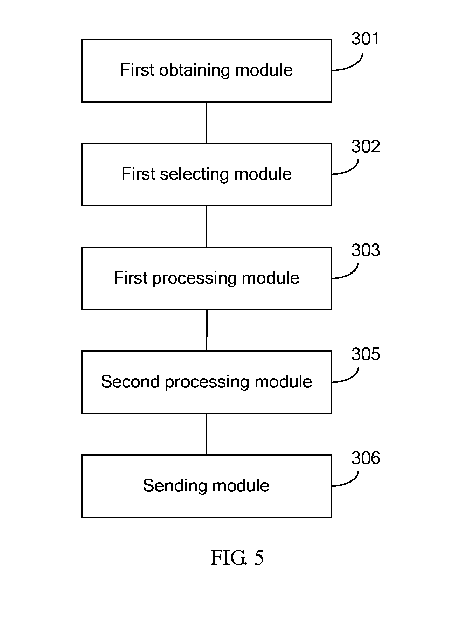

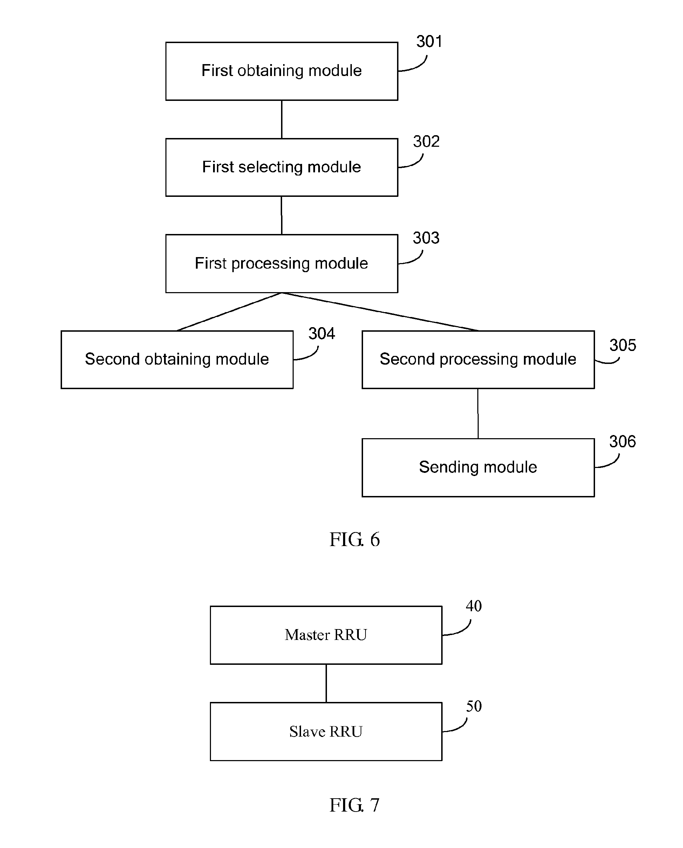

Further, referring to FIG. 5 or FIG. 6, the apparatus also includes:
a second processing module 305, configured to obtain downlink service data, and process the downlink service data; and
a sending module 306, configured to synchronously send each RRU processed downlink service data obtained by the second processing module 305, so that after receiving the processed downlink service data, each RRU synchronously sends the processed downlink service data.

That the second processing module 305 obtains the downlink service data, and processes the downlink service data may specifically be that the second processing module 305 obtains the downlink service data, and performs downlink in-band signaling processing and encoding on the downlink service data to obtain encoded downlink service data. Accordingly, the processed downlink service data in the sending module 306 is specifically the encoded downlink service data.

With the communication apparatus described in the embodiment of the present invention, by selecting a signal with best signal quality to perform uplink communication, mobile stations served by different RRUs are enabled to use a superior uplink signal, and communication quality of the mobile stations during communication in scenarios such as a packet switched domain may be ensured in a high-speed movement process; moreover, by selecting the signal with the best signal quality to perform the uplink communication, in a case of air interface interference in part of RRUs, service performance is not affected, and better service experience may be brought to a customer. Besides, by selecting an access request signal with best signal quality to get access, it may be ensured that the mobile stations can get access in the high-speed movement process. In addition, by synchronously sending the encoded downlink service data to each RRU, each RRU is enabled to synchronously send the encoded downlink service data after receiving the encoded downlink service data, and a mobile station served by any RRU is enabled to receive the downlink service data.

### Embodiment 4

Referring to FIG. 7, an embodiment of the present invention provides a communication system. The system includes:
one master remote radio unit RRU 40 and at least one slave RRU 50, where the master RRU 40 and the slave RRU 50 physically belong to different station addresses and logically belong to a same cell.

The slave RRU 50 is configured to receive an uplink signal sent by a mobile station, decode the uplink signal to obtain uplink data, and send the uplink data and signal quality of the received uplink signal to the master RRU 40.

The master RRU 40 includes: a third processing module and a fourth processing module.

The third processing module is configured to receive the uplink signal sent by the mobile station, decode the uplink signal to obtain the uplink data, and send the uplink data and signal quality of the received uplink signal to the fourth processing module.

The fourth processing module is configured to receive the uplink data and the signal quality of the uplink signal which are sent by the slave RRU 50 and the third processing module; select uplink data sent by an RRU with best signal quality; and process the uplink data sent by the RRU with the best signal quality, and then send the processed uplink data to a BSC.

The signal quality of the uplink signal may specifically be a parameter, such as a SNR of the uplink signal, which can embody quality of the signal. Moreover, generally, the nearer an RRU is to a mobile station, the better signal quality of a received uplink service signal is.

An RRU may be randomly selected as the master RRU 40 from all RRUs that belong to a same RRU cell; or an RRU may be selected, according to a certain selection rule, as the master RRU 40 from all RRUs that belong to a same RRU cell. A method for selecting the master RRU 40 is not limited here.

Further, the uplink data is uplink service access request data or uplink service data.

Further, when the uplink data is uplink service access request data, the master RRU also includes:
a fifth processing module, configured to obtain information of a channel allocated by the BSC for an uplink service corresponding to the uplink service access request data, and inform each RRU about the information of the channel. Further, the master RRU40 also includes:
   a sixth processing module, configured to obtain downlink service data, process the downlink service data, and synchronously send processed downlink service data to each RRU, so that after receiving the processed downlink service data, each RRU synchronously sends the processed downlink service data.

That the sixth processing module obtains the downlink service data and processes the downlink service data may specifically be that the sixth processing module obtains the downlink service data, and performs downlink in-band signaling processing and encoding on the downlink service data to obtain encoded downlink service data. Accordingly, the foregoing processed downlink service data is specifically the encoded downlink service data.

With the communication system described in the embodiment of the present invention, by selecting a signal with best signal quality to perform uplink communication, mobile stations served by different RRUs are enabled to use a superior uplink signal, and communication quality of the mobile stations during communication in scenarios such as a packet switched domain may be ensured in a high-speed movement process; moreover, by selecting the signal with the best signal quality to perform the uplink communication, in a case of air interface interference in part of RRUs, service performance is not affected, and better service experience may be brought to a customer. Besides, by selecting an access request signal with best signal quality to get access, it may be ensured that the mobile stations can get access in the high-speed movement process. In addition, by synchronously sending the encoded downlink service data to each RRU, each RRU is enabled to synchronously send the encoded downlink service data after receiving the encoded downlink service data, and a mobile station served by any RRU is enabled to receive the downlink service data.

All or part of the content in the technical solutions provided in the foregoing embodiments may be implemented by software programming, and a software program of it may be stored in a readable storage medium, where the storage medium is, for example, a hard disk, an optical disk, or a floppy disk of a computer.

The foregoing descriptions are only exemplary embodiments of the present invention, and are not intended to limit the present invention. Any modification, equivalent replacement, and improvement made within the principle of the present invention shall fall within the protection scope of the present invention.

## Claims

1. A communication method, wherein the method comprises:
obtaining (101, 202) uplink data and signal quality of an uplink signal corresponding to the uplink data, wherein the uplink data and the signal quality are sent by each remote radio unit, RRU, in a RRU cell;
selecting (102, 203) uplink data sent by an RRU with best signal quality in the RRU cell;
processing (103, 203) the uplink data sent by the RRU with the best signal quality; and
sending (103, 203) the processed uplink data to a base station controller, BSC.

2. The communication method according to claim 1, wherein the selecting the uplink data sent by the RRU with the best signal quality specifically comprises:
comparing a signal to noise ratio of the uplink signal, wherein the signal to noise ratio of the uplink signal is sent by each RRU in the RRU cell, and selecting uplink data sent by an RRU with a highest signal to noise ratio in the RRU cell.

3. The communication method according to claim 1 or 2, wherein the uplink data is uplink service access request data or uplink service data.

4. The communication method according to claim 3, wherein if the uplink data is the uplink service access request data, after the processing the uplink data sent by the RRU with the best signal quality, and sending the processed uplink data to the BSC, the method further comprises:
obtaining information of a channel allocated by the BSC for an uplink service corresponding to the uplink service access request data, and informing each RRU in the RRU cell about the information of the channel.

5. The communication method according to any one of claims 1 to 4, wherein the method further comprises:
obtaining (209) downlink service data, and processing the downlink service data; and
synchronously sending (210) processed downlink service data to each RRU in the RRU cell, so that after receiving the processed downlink service data, each RRU in the RRU cell synchronously sends the processed downlink service data.

6. A communication apparatus, wherein the apparatus comprises:
a first obtaining module (301), configured to obtain uplink data and signal quality of an uplink signal corresponding to the uplink data, wherein the uplink data and the signal quality are sent by each remote radio unit, RRU, in a RRU cell;
a first selecting module (302), configured to select uplink data that is sent by an RRU with best signal quality and obtained by the first obtaining module; and
a first processing module (303), configured to process the uplink data that is sent by the RRU with the best signal quality in the RRU cell and selected by the first selecting module, and then send the processed uplink data to a base station controller, BSC.

7. The communication apparatus according to claim 6, wherein the first selecting module comprises:
a selecting unit, configured to compare a signal to noise ratio of the uplink signal and select uplink data sent by an RRU with a highest signal to noise ratio in the RRU cell, wherein the signal to noise ratio of the uplink signal is sent by each RRU in the RRU cell and obtained by the first obtaining module.

8. The communication apparatus according to claim 6 or 7, wherein the uplink data is uplink service access request data or uplink service data.

9. The communication apparatus according to claim 8, wherein if the uplink data is the uplink service access request data, the apparatus further comprises:
a second obtaining module (304), configured to obtain channel information of a channel allocated by the BSC for an uplink service corresponding to the uplink service access request data, and inform each RRU in the RRU cell about the information of the channel.

10. The communication apparatus according to any one of claims 6 to 9, wherein the apparatus further comprises:
a second processing module (305), configured to obtain downlink service data, and process the downlink service data; and
a sending module (306), configured to synchronously send each RRU the processed downlink service data obtained by the second processing module, so that after receiving the processed downlink service data, each RRU synchronously sends the processed downlink service data.

11. A communication system, wherein the system comprises: one master remote radio unit, RRU (40) and at least one slave RRU (50), and the master RRU and the slave RRU physically belong to different station addresses and logically belong to a same cell, wherein
the slave RRU is configured to receive an uplink signal sent by a mobile station, decode the uplink signal to obtain uplink data, and send the uplink data and signal quality of the received uplink signal to the master RRU; and
the master RRU comprises: a third processing module and a communication apparatus according to any one of claims 6-10 ; wherein
the third processing module is configured to receive the uplink signal sent by the mobile station, decode the uplink signal to obtain the uplink data, and send the uplink data and signal quality of the received uplink signal to the fourth processing module; and
the communication apparatus is configured to receive the uplink data and the signal quality of the uplink signal which are sent by the slave RRU and the third processing module; select uplink data sent by an RRU with best signal quality; and process the uplink data sent by the RRU with the best signal quality, and then send the processed uplink data to a base station controller, BSC.
